Europäisches Patentamt

European Patent Office

Office européen des brevets

(19)

(11) EP 0 667 443 B1

(12) **EUROPÄISCHE PATENTSCHRIFT**

(45) Veröffentlichungstag und Bekanntmachung des Hinweises auf die Patenterteilung:
**13.05.1998 Patentblatt 1998/20**

(51) Int Cl.⁶: **F01D 17/08**, G01J 5/00

(21) Anmeldenummer: **95101569.2**

(22) Anmeldetag: **07.02.1995**

(54) **Verfahren zum Korrigieren eines Temperaturwertes eines Pyrometers in einer Gasturbine**

Method for correcting a temperature value of a pyrometer in a gas turbine

Méthode pour corriger une valeur de température d'un pyromètre dans une turbine à gaz

(84) Benannte Vertragsstaaten:
**DE ES FR GB IT**

(30) Priorität: **11.02.1994 DE 4404577**

(43) Veröffentlichungstag der Anmeldung:
**16.08.1995 Patentblatt 1995/33**

(73) Patentinhaber: **MTU MOTOREN- UND TURBINEN-UNION MÜNCHEN GMBH 80976 München (DE)**

(72) Erfinder: **Kurzke, Joachim, Dr. D-85221 Dachau (DE)**

(56) Entgegenhaltungen:
GB-A- 2 123 549          US-A- 4 827 429
US-A- 5 226 731          US-A- 5 265 036

- **PATENT ABSTRACTS OF JAPAN vol. 010 no. 286 (M-521) ,27.September 1986 & JP-A-61 104123 (MITSUBISHI ELECTRIC CORP) 22.Mai 1986,**

**Beschreibung**

Die Erfindung betrifft ein Verfahren zum Korrigieren eines Temperaturwertes eines Pyrometers in einer Gasturbine.

Die Temperaturmessung mit Pyrometern bei Gasturbinen dient indirekt dazu, die Leistung der Gasturbine zu bestimmen. Die Leistung der Gasturbine ist direkt von der im Betrieb maximal zulässigen Brennkammeraustrittstemperatur abhängig. Da diese nicht direkt meßbar ist, wird in der Praxis eine Temperatur im Turbinenbereich gemessen. Diese Messung kann mit Pyrometern erfolgen, die die Rotorschaufeltemperatur der Hoch-, Mittel- oder der Niederdruckturbine messen. Ist die von dem Pyrometer gemessene Temperatur bekannt, kann die der Gasturbine zuzuführende Brennstoffmenge geregelt werden.

Es ist jedoch problematisch, die Turbinenschaufeltemperatur mit einem Pyrometer in einer Gasturbine genau zu messen. Dies rührt daher, daß die Linse des Pyrometers im Laufe der Zeit verschmutzen kann, wodurch das Pyrometersignal, welches der Auswerteelektronik übertragen wird, vermindert wird. Somit führt die Verschmutzung der Linse des Pyrometers dazu, daß die gemessene Temperatur niedriger ist als die tatsächliche Temperatur der Turbinenschaufel.

Zur Vermeidung derartiger Beeinträchtigungen wird in der Praxis die Linse des Pyrometers mit einem Schleier aus Verdichterluft, der sogenannten Sperrluft, umgeben, welcher die Linse vor den Verbrennungsgasen der Gasturbine schützen soll. Bei sauberer Sperrluft wird dadurch die Verschmutzung der Linse im allgemeinen verringert. Jedoch ist auch die Sperrluft nicht immer sauber. Zum Beispiel wird bei Tiefflügen militärischer Flugzeuge über dem Meer salzhaltige Luft angesaugt, so daß auch die Sperrluft, mit der die Pyrometerlinse geschützt werden soll, eine gewisse Menge von dem angesaugten Salz enthält. Dieses schlägt sich auf der Linse nieder, wodurch sie allmählich getrübt wird, was wiederum zu einer Verfälschung der Temperaturmessung führt. Für eine genaue Temperaturmessung muß daher das Pyrometer in kurzen Zeitabständen immer wieder neu kalibriert werden.

Der Erfindung liegt die Aufgabe zugrunde, eine Verschmutzung von Pyrometerteilen, insbes. der Pyrometerlinse zu erkennen und den Temperaturwert des Pyrometers zu korrigieren.

Diese Aufgabe wird erfindungsgemäß durch die Merkmale des Anspruchs 1 gelöst.

Da die Meßwerte in einem stationären Betriebszustand gemessen werden, haben sie eine sehr gute Qualität. Es wird eine unerwünschte Verfälschung der Meßwerte aufgrund starker Schwankungen des Betriebszustandes vermieden. Da aus diesen Meßwerten ein zweiter Temperaturwert als Vergleichswert bestimmt wird, hat auch der Vergleichswert eine gute Qualität und ist nicht von Schwankungen aufgrund starker Änderungen in dem Betriebszustand beeinflußt. Daher wird auch eine Verschmutzung der Pyrometerlinse erkannt, bei der die Verschmutzung sehr gering ist und allmählich erfolgt; denn aufgrund der Genauigkeit des Vergleichswertes können kleine Fehler bei der Temperaturmessung erkannt werden. Da der Temperaturwert des Pyrometers aufgrund des Vergleichwertes korrigiert wird, kann die Gastemperatur auch bei einer allmählichen Verschmutzung der Pyrometerlinse genau bestimmt werden. Ein neues Kalibrieren des Pyrometers ist daher erst nach relativ großen Zeitabständen wieder erforderlich.

Es ist günstig, wenn während der Betriebsphase Zustandsgrößen kontinuierlich aufgenommen werden, die Änderungen der Zustandsgrößen kontinuierlich überprüft werden und die Meßwerte nur dann gespeichert werden, wenn festgestellt wird, daß die Änderungen jeweils eine vorgegebene Bedingung erfüllen, die einem stationären Betriebszustand entspricht. So kann zuverlässig festgestellt werden, wann ein stationärer Betriebszustand des Triebwerks vorliegt, und die Meßwerte werden nur in einem solchen Betriebszustand gespeichert, bei dem sie weiterverarbeitet und zur Korrektur des Temperaturwerts des Pyrometers verwendet werden sollen, so daß keine unnötigen Daten gespeichert werden. Das Überprüfen der Änderungen der Zustandsgrößen sowie das Speichern kann von einer digitalen Regelung übernommen werden. Der stationäre Betriebszustand kann zuverlässig erkannt werden, wenn eine Gashebelstellung, eine Temperatur am Triebwerkseintritt, ein Druck am Triebwerkseintritt, eine Hochdruckdrehzahl, eine Niederdruckdrehzahl und eventuell eine Fluglage als Zustandsgrößen aufgenommen werden.

Zur zuverlässigen Bestimmung des Vergleichwertes ist es besonders günstig, wenn eine Temperatur und ein Druck am Austritt des letzten Verdichters der Gasturbine sowie eine der Gasturbine zugeführte Brennstoffmenge als Meßwerte gemessen werden. Günstigerweise wird der Vergleichswert aus den Meßwerten und wenigstens einer Konstanten bestimmt, und die Konstante wird in der ersten Betriebsphase mit Hilfe des Temperaturwertes des Pyrometers festgelegt. Durch derartiges Verwenden und Festlegen der Konstanten kann das erfindungsgemäße Verfahren an das jeweilige Triebwerk angepaßt werden. Dies ist möglich, da von dem Pyrometer nach seiner Neukalibrierung der korrekte Temperaturwert angezeigt wird. Da die Pyrometerverschmutzung langsam erfolgt, wird während mehrerer Flüge nach der Neukalibrierung der korrekte Temperaturwert angezeigt, so daß die Konstante in der ersten Betriebsphase, also etwa nach mehreren Flügen zuverlässig festgelegt werden kann. Der Wert der Konstanten hängt von den speziellen Eigenschaften des Triebwerks ab. Es sind in der Konstanten Produktionsstreuungen der Turbinenkapazität, individuelle Eigenschaften des Luftsystems und alle systematischen Meßfehler der Meßwerte bei dem individuellen Triebwerk enthalten. Die Anpassung der Konstanten kann nach jeder Triebwerkszerlegung, nach Tausch des Meßgerätes für die zugeführte Brennstoffmenge bzw. nach Neukalibrierung des Pyrometers, eventuell bei Verwenden eines Brennstoffes mit einem anderen Heizwert vorgenommen werden.

Gemäß einer vorteilhaften Weiterbildung der Erfindung kann der Vergleichswert einem Filterverfahren unterzogen werden. Das Filterverfahren kann einen Algorithmus umfassen, für den der Vergleichswert als ein Eingangswert verwendet wird. Zur Initialisierung des Algorithmus kann es auch sinnvoll sein, einen bestimmten Startwert vorzuschreiben und einzugeben. Durch ein derartiges Filterverfahren wird die Streuung der Meßwerte weiter verringert. Die Filterung kann über eine bestimmte Anzahl von Betriebsphasen oder Betriebsstunden erfolgen. Nach dem Filterverfahren ist der Vergleichswert von zufälligen Streuungen und von Meßrauschen bereinigt. Mit dem Algorithmus kann beispielsweise ein gleitender Mittelwert des Vergleichswertes bestimmt werden. Der gleitende Mittelwert ist dabei der Mittelwert aus den letzten N Meßwertspeicherungen. Der Vergleichswert kann nach der Filterung abgespeichert werden, so daß er weiterverarbeitet werden kann. Es ist vorteilhaft, wenn der gefilterte Vergleichswert nur gespeichert wird, wenn seine Änderungsrate einen vorbestimmten Grenzwert nicht überschreitet. Dann wird das Vorhandensein von weiteren Störeinflüssen noch zuverlässiger ausgeschlossen.

Die Genauigkeit des Vergleichswertes und damit der Korrektur des Temperaturwertes des Pyrometer kann weiter dadurch verbessert werden, daß bei einer bestimmten Streuung eines Korrekturfaktors bei aufeinanderfolgenden Betriebsphasen, um welchen sich der Temperaturwert des Pyrometers von dem gefilterten Vergleichswert unterscheidet, der Korrekturfaktor einer Filterung unterzogen wird. Die Filterung kann analog dem Filterverfahren des Vergleichswertes durchgeführt werden. Sie kann auch durchgeführt werden, wenn der Vergleichswert nicht gefiltert wurde. Ferner kann die Genauigkeit verbessert werden, wenn die Konstante während der ersten Betriebsphasen einem Filterverfahren unterzogen wird. Die ersten Betriebsphasen können z. B. 20 bis 30 Flüge sein.

Der Temperaturwert des Pyrometers kann aufgrund des Vergleichswerts bei einer nächsten Betriebsphase der Gasturbine korrigiert werden. In diesem Fall kann der Vergleichswert während einer oder mehrerer Betriebsphasen bestimmt und abgespeichert werden und dann für die nächste Betriebsphase verwendet werden. Die Korrektur des Temperaturwertes kann dann vor oder bei Beginn der nächsten Betriebsphase erfolgen.

Es kann auch vorteilhaft sein, daß der Temperaturwert des Pyrometers aufgrund des Vergleichswerts in der gleichen Betriebsphase der Gasturbine korrigiert wird. In diesem Fall erfolgt die Korrektur des Temperaturwertes schneller, wenn dies aufgrund äußerer Bedingungen wünschenswert ist. Ferner kann es günstig sein, wenn der Temperaturwert des Pyrometers aufgrund des Vergleichswerts nur dann korrigiert wird, wenn bestimmte Qualitätsbedingungen des Vergleichswertes erfüllt sind. Dann wird gewährleistet, daß der korrigierte Temperaturwert auch nicht geringen Fehlern unterliegt, sondern immer die erforderlichen Qualitätsbedingungen erfüllt sind. Es muß hier nicht bei jeder Betriebsphase der Temperaturwert das Pyrometer neu korrigiert werden, sondern die Korrektur erfolgt nur dann, wenn sie beispielsweise zu einer Verbesserung der Genauigkeit des Temperaturwertes führt und eine solche Korrektur auch wirklich erforderlich ist. Die Qualitätsbedingung kann etwa durch einen Grenzwert der Änderungsrate des Vergleichswertes gegeben sein.

Ebenfalls kann es vorteilhaft sein, daß der Temperaturwert des Pyrometers aufgrund des Vergleichswertes zwischen zwei Betriebsphasen der Gasturbinen korrigiert wird. In diesem Fall können der Vergleichswert sowie der Korrekturfaktor für den Temperaturwert des Pyrometers unabhängig von der digitalen Regelung, die für den Betriebszustand der Gasturbine verwendet wird, z. B. außerhalb des Flugzeugs, berechnet und jeweils vor dem Start des Triebwerkes in die Regelung eingegeben werden.

Im folgenden wird das erfindungsgemäße Verfahren anhand eines Ausführungsbeispiels genauer beschrieben.

Im vorliegenden Beispiel handelt es sich um eine Fluggasturbine, die ein Einstromtriebwerk oder ein Zweistromtriebwerk sein kann. Mit einem Pyrometer wird die Temperatur der Turbinenlaufschaufeln gemessen. Aufgrund dieser Temperatur kann die Leistung der Gasturbine bestimmt und die Brennstoffmenge des Triebwerkes geregelt werden. Da die Temperaturmessung mit einem solchen Pyrometer aufgrund von Verschmutzung und Alterung von Pyrometerteilen, insbesondere der Pyrometerlinse verfälscht wird, wird der Temperaturwert des Pyrometers $T_P$ korrigiert. Hierzu wird aus Meßwerten ein zweiter Temperaturwert als Vergleichswert $T_V$ bestimmt.

Bei den Meßwerten handelt es sich in diesem Ausführungsbeispiel um eine Temperatur $T_3$, und einen Druck $P_3$ am Austritt des letzten Verdichters der Gasturbine sowie um die der Gasturbine zugeführte Brennstoffmenge $W_F$. Aus diesen Meßwerten kann der Vergleichswert $T_V$ wie folgt bestimmt werden.

Es wird angenommen, daß die Meßwerte in der Nähe von Vollast des Triebwerkes und bei nicht zu kleinem Reynoldszahlniveau aufgenommen werden. Unter diesen Umständen können folgende Annahmen gemacht werden:

a) Turbinenkapazität

$$W_4\sqrt{T_4}/P_4 = \text{konstant}$$

b) Kühlungseffektivität $\eta = (T_{rel} - T_{metall})/(T_{rel} - T_3) = \text{konstant}$

c) Brennkammerdruckverlust $P_4/P_3=$ konstant

d) Relativtemperatur $T_{rel}=k_1{}^*T_4$ mit $k_1=$ konstant

Dabei sind:

$W_4$        der Massendurchsatz im Drosselquerschnitt der Turbine bzw. am Eintritt des Stators,

$T_4$        die Totaltemperatur im Drosselquerschnitt der Turbine bzw. am Eintritt des Stators,

$P_4$        der Totaldruck im Drosselquerschnitt der Turbine, bzw. am Eintritt des Stators und

$T_{Metall}$        die Metalltemperatur auf der Oberfläche der Turbinenschaufel, welche von dem Pyrometer gesehen wird.

Aus den Meßwerten, dem Totaldruck am Verdichteraustritt $P_3$ und der Brennstoffmenge $W_F$ sowie den Annahmen a und c wird folgende Hilfsgröße y berechnet:

$$y = k \cdot W_4 \sqrt{T_4}/P_4 \cdot P_4/P_3 \cdot P_3/W_F \qquad (1)$$

Dabei stellt die Größe y das Luft-Brennstoff-Verhältnis in der Brennkammer dar. Aus y und dem Meßwert der Totaltemperatur am Verdichteraustritt $T_3$ kann die Temperatur $T_4$ im Drosselquerschnitt der Turbine wie folgt bestimmt werden:

$$T_4 = f\,(y, T_3) \qquad (2)$$

Der Zusammenhang (2) zwischen y, $T_3$ und $T_4$ ist in dem Regler der Gasturbine in Form einer Tabelle oder als Formel gespeichert.

Ein Vergleichswert $T_V$ für die Pyrometertemperatur $T_P$ kann dann aus den Beziehungen b und d berechnet oder aus einer Tabelle entnommen werden. Es gilt:

$$T_V = f\,(T_3, T_4) \qquad (3)$$

Aufgrund des Vergleichswertes $T_V$ kann der Temperaturwert des Pyrometers $T_P$ z. B. mit einem Korrekturfaktor korrigiert werden.

Diese Korrektur ist jedoch nur dann sinnvoll, wenn gewährleistet ist, daß die Meßwerte in einem stationären Betriebszustand gemessen worden sind. Denn zufällige Störungen in den Meßwerten, insbesondere in der Brennstoffmenge $W_F$ weisen eine erhebliche Streuung aufgrund von zufälligen Störungen auf.

Der stationäre Betriebszustand wird von der digitalen Regelung der Turbine während eines Fluges überprüft. Es wird geprüft, ob folgende Bedingungen erfüllt sind:

1. Die Gashebelstellung ist seit x Sekunden bei einem relativ hohen Lastzustand des Triebwerkes unverändert.

2. Die Totaltemperatur am Triebwerkseintritt $T_2$ hat sich seit x Sekunden um weniger als $\pm\Delta T$ geändert.

3. Der Totaldruck am Triebwerkseintritt $P_2$ hat sich seit x Sekunden um weniger als $\pm\Delta P$ geändert.

4. Die Niederdruckdrehzahl $N_L$ hat sich seit x Sekunden um weniger als $\pm\Delta_{N_L}$ geändert.

5. Die Hochdruckdrehzahl $N_H$ hat sich seit x Sekunden um weniger als $\pm\Delta_{N_H}$ geändert.

6. Das Flugzeug befindet sich seit x Sekunden in einer stationären Fluglage, die zu nur unbedeutenden Störungen in der Zuströmung zum Triebwerk führt.

7. $T_2$ und $P_2$ liegen in einem vorgegebenen Wertebereich.

Wenn von der Regelung festgestellt wird, daß die Bedingungen 1 bis 7 erfüllt sind und es sich somit um einen stationären Betriebszustand handelt, werden die Meßwerte, d. h. die Totaltemperatur $T_3$ sowie der Totaldruck $P_3$ am Ausgang des Verdichters der Gasturbine sowie die Brennstoffmenge $W_F$ in der digitalen Regeleinrichtung abgespeichert. Aus den abgespeicherten Werten wird nun, wie oben beschrieben, der Vergleichswert $T_V$ bestimmt.

Die so erhaltenen Vergleichswerte $T_V$ werden einem Filterverfahren unterzogen, um noch vorhandene Streuungen der Meßwerte zu eliminieren. Hierzu wird der Vergleichswert $T_V$ als Eingangswert in einem Algorithmus verwendet. Der Algorithmus bestimmt den Trend von dem Vergleichswert $T_V$ als Funktion von der Betriebszeit des Triebwerkes seit Beginn des Korrekturverfahrens. Es kann hierfür zum Beispiel ein Algorithmus verwendet werden, der den gleitenden Mittelwert des Vergleichswertes $T_V$ über eine bestimmte Anzahl von Flügen oder Betriebsstunden bestimmt. Der gleitende Mittelwert ist der Mittelwert aus den letzten N Speicherungen der Meßwerte $T_3$, $P_3$ und $W_F$. Wenn ein neuer, aus Meßwerten berechneter Vergleichswert $T_V$ zur Verfügung steht, wird der neue gleitende Mittelwert der Vergleichswerte $T_{V,M}$ wie folgt berechnet:

$$T_{V,Trend,neu} = \frac{N \cdot T_{V,Trend,alt} + T_V}{N+1} \qquad (4)$$

Als Ergebnis des Algorithmus erhält man den gefilterten Vergleichswert $T_{V,M}$. Bei diesem Vergleichswert sind die zufälligen Streuungen der Meßwerte und Meßrauschen beseitigt. Um sicherzustellen, daß auch keine weiteren Störungen vorliegen, kann noch überprüft werden, ob die Änderungsrate des Vergleichswertes $T_{V,M}$ durch einen vorgegebenen Grenzwert begrenzt ist. Danach wird der gefilterte Vergleichswert $T_{V,M}$ in der digitalen Regeleinrichtung abgespeichert. Der Temperaturwert $T_P$ des Pyrometers wird durch einen entsprechenden Korrekturfaktor korrigiert. Die so bestimmten Korrekturfaktoren können ebenfalls einem Filterverfahren unterzogen werden, welches analog dem oben beschriebenen Algorithmus erfolgen kann.

Die Korrektur des Temperaturwertes des Pyrometers $T_P$ erfolgt dann vor oder bei Beginn des nächsten Fluges. Die Korrektur kann aber auch bereits während des Fluges erfolgen, ferner kann die Korrektur des Temperaturwertes des Pyrometers auch nur dann erfolgen, wenn bestimmte Qualitätsbedingungen des Vergleichswertes $T_{V,M}$ erfüllt sind, so daß die Korrektur nicht bei jedem Flug vorgenommen wird. Auch ist es möglich, daß der Vergleichswert $T_{V,M}$ außerhalb der digitalen Regeleinrichtung berechnet wird, also z. B. zwischen zwei Flügen, oder vor irgendeinem der folgenden Flüge bzw. vor dem Start des Triebwerkes in die Regeleinrichtung des Flugzeuges eingegeben wird. Wie das Verfahren im einzelnen ausgeführt wird, ist nach den Einzelumständen zu entscheiden.

Bei dem oben beschriebenen Verfahren ist zu berücksichtigen, daß in die Bestimmung des Vergleichswertes $T_V$ aus den Meßwerten, von der Temperatur $T_3$, dem Druck $P_3$ am Ausgang des Verdichters der Gasturbine sowie der der Gasturbine zugeführten Brennstoffmenge $W_F$, die Konstante k eingeht, welche von den speziellen Eigenschaften des jeweiligen Triebwerkes abhängt. Es gehen in diese Konstante k Produktionsstreuungen der Turbinenkapazität sowie des Luftsystems und alle systematischen Meßfehler von $W_f$, $T_3$ und $P_3$ bei dem individuellen Triebwerk ein.

Folglich muß die Konstante k nach jeder Triebwerkszerlegung, nach einem Austausch des Meßgerätes zum Messen der zugeführten Brennstoffmenge $W_F$ und nach jeder Neukalibrierung des Pyrometers neu bestimmt werden. Das gleiche gilt, wenn ein Brennstoff mit einem grundsätzlich anderen Heizwert verwendet wird, sofern dies nicht nur vorübergehend der Fall ist.

Das Bestimmen der Konstanten k ist jeweils während der ersten Betriebsphasen hinsichtlich der oben genannten Bedingungen möglich, da vorausgesetzt werden kann, daß die Pyrometerverschmutzung unter normalen Umständen nur langsam geschieht. Unter diesen Umständen gibt das Pyrometer den Temperaturwert der entsprechenden Turbinenschaufel für eine begrenzte Anzahl von Flügen unmittelbar nach einer Neukalibrierung des Pyrometer korrekt wieder. Diese ersten Betriebsphasen können etwa 10 bis 20 Flüge umfassen. In dieser Zeit kann dann der für das jeweilige Triebwerk repräsentative Wert für die Konstante k bestimmt werden. Erst danach wird dann das oben beschriebene Korrekturverfahren zur Korrektur des Temperaturwertes des Pyrometers $T_P$ durchgeführt.

Die Konstante k wird wie folgt bestimmt:
Unter den oben beschriebenen Annahmen b und d, d. h. konstante Kühlungseffektivität und konstantes Verhältnis von der relativen Gastemperatur $T_{rel}$ zu der Totaltemperatur $T_4$ im oder vor dem Drosselquerschnitt der Turbine kann aus der Temperatur $T_3$ am Austritt des Verdichters der Gasturbine und dem Temperaturwert des Pyrometer $T_P$ ein Wert für die Totaltemperatur $T_4$ aus folgender Beziehung bestimmt werden:

$$T_4 = f\,(T_P,\, T_3) \tag{5}$$

Dieser Zusammenhang entspricht dem in Gleichung 3 oben dargestellten.

Es kann dann entsprechend der oben dargestellten Beziehung (2) das Luft-Brennstoff-Verhältnis y wie folgt bestimmt werden:

$$y = f\,(T_3,\, T_4) \tag{6}$$

Damit erhält man aus Gleichung 1 wie folgt die Konstante k:

$$k = y/(W_4\sqrt{T_4}/P_4 \cdot P_4/P_3 \cdot P_3/W_F) \tag{7}$$

Wenn man den Wert der Konstanten k auf diese Weise einmal erhalten hat, kann dann das oben beschriebene Korrekturverfahren auf das individuelle Triebwerk der Gasturbine angepaßt durchgeführt werden. Zur Verbesserung der Genauigkeit der Bestimmung der Konstanten k kann diese einem Filterverfahren unterzogen werden, welches z. B. wie das im Zusammenhang mit dem Filterverfahren des Vergleichswertes $T_V$ beschriebene. Man kann davon ausgehen, daß man nach etwa 10 bis 20 Flügen einen für das jeweilige Triebwerk repräsentativen Wert für die Konstante k gefunden hat.

**Patentansprüche**

1. Verfahren zum Korrigieren von einem in eine Gasturbine eingebauten Pyrometer gemessenen Temperaturwert ($T_P$) zur Korrektur von über längere Betriebsdauer auftretenden Fehlereinflüssen, wobei in einem stationären Betriebszustand der Gasturbine Betriebsgrößen (z. B. Verdichtertemperatur $T_3$, Verdichterdruck $P_3$, Brennstoffmenge $W_F$ etc.) gemessen werden, aus denen die vom Pyrometer zu messende Betriebstemperatur als Vergleichswert ($T_V$) errechnet werden kann, wobei ein solcher Vergleichswert ($T_V$) bestimmt wird und wobei aus dem vom Pyrometer angezeigten Temperaturwert ($T_P$) der zu messenden Betriebstemperatur und dem errechneten Vergleichswert ($T_V$) ein Korrekturfaktor ($f_k$) ermittelt wird, welcher als Korrekturwert dem Pyrometer eingegeben wird.

2. Verfahren nach Anspruch 1, dadurch gekennzeichnet, daß zur Ermittlung des stationären Betriebszustandes der Gasturbine während der Betriebsphase Zustandsgrößen kontinuierlich aufgenommen werden, daß die Änderungen der Zustandsgrößen kontinuierlich überprüft und die Meßwerte gespeichert werden, wenn festgestellt wird, daß die Änderungen jeweils eine vorgegebene Bedingung erfüllen die dem stationären Betriebszustand entspricht.

3. Verfahren nach Anspruch 2, dadurch gekennzeichnet, daß als Zustandsgrößen eine Gashebelstellung, eine Temperatur $T_2$ am Triebwerkseintritt, ein Druck $P_2$ am Triebwerkseintritt, eine Hochdruckdrehzahl, eine Niederdruckdrehzahl bzw. eine Fluglage aufgenommen werden, um einen stationären Betriebszustand festzustellen.

4. Verfahren nach einem der vorangehenden Ansprüche, dadurch gekennzeichnet, daß der Vergleichswert $(T_V)$ aus den Meßwerten und wenigstens einer Konstanten (k) bestimmt wird, und daß in einer der ersten Betriebsphasen die Konstante (k) mit Hilfe des Temperaturwertes des Pyromters $(T_P)$ festgelegt wird.

5. Verfahren nach einem der vorangehenden Ansprüche, dadurch gekennzeichneet, daß der Vergleichswert $(T_V)$ einem Filterverfahren unterzogen wird.

6. Verfahren nach einem der vorangehenden Ansprüche, dadurch gekennzeichnet, daß der Vergleichswert $(T_V)$ nach der Filterung gespeichert wird.

7. Verfahren nach Anspruch 6, dadurch gekennzeichnet, daß der gefilterte Vergleichswert $(T_V)$ nur gespeichert wird, wenn seine Änderungsrate einen vorbestimmten Grenzwert nicht überschreitet.

8. Verfahren nach einem der vorangehenden Ansprüche, dadurch gekennzeichnet, daß bei einer bestimmten Streuung eines Korrekturfaktors $(f_k)$ bei aufeinanderfolgenden Betriebsphasen, um welchen sich der Temperaturwert des Pyrometers $(T_P)$ von dem gefilteren Vergleichswert $(T_V)$ unterscheidet, der Korrekturfaktor einer Filterung unterzogen wird.

9. Verfahren nach Anspruch 4, dadurch gekennzeichnet, daß die Konstante (k) während der ersten Betriebsphasen einem Filterverfahren unterzogen wird.

10. Verfahren nach einem der Ansprüche 1 bis 9, dadurch gekennzeichnet, daß der Temperaturwert des Pyrometers $(T_P)$ aufgrund des Vergleichswertes $(T_V)$ nur dann korrigiert wird, wenn bestimmte Qualitätsbedingungen des Vergleichswertes erfüllt sind.

11. Verfahren nach Anspruch 10, dadurch gekennzeichnet, daß eine Qualtiätsbedingung durch einen Grenzwert der Änderungsrate des Vergleichswertes $(T_V)$ gegeben ist.

12. Verfahren nach Anspruch 10, dadurch gekennzeichnet, daß der Temperaturwert des Pyrometers $(T_P)$ aufgrund des Vergleichswertes $(T_V)$ zwischen zwei Betriebsphasen der Gasturbine korrigiert wird.

**Claims**

1. Method for correcting a temperature value $(T_p)$ measured by a pyrometer installed in a gas turbine for the correction of failure effects occurring over a long period of operation, involving the measurement, whilst the gas turbine is in a stationary operating condition, of operating variables (e.g. compressor temperature $T_3$, compressor pressure $P_3$, fuel quantity $W_F$, etc.) from which the operating temperature that is to be measured by the pyrometer can be calculated as a comparative value $(T_V)$, such comparative value $(T_V)$ being determined, and a correction factor $(f_k)$ is ascertained from the temperature value $(T_p)$ displayed on the pyrometer, namely the measured operating temperature, and from the comparative value $(T_V)$ that has been calculated, which factor is fed into the pyrometer as a correction value.

2. Method according to claim 1, characterised in that status variables are continuously recorded during the operating phase in order to ascertain the stationary operating state of the gas turbine, that the changes in the status variables are continuously checked and the measured values are stored if it is found that the changes respectively satisfy a preset condition that corresponds to the stationary operating state.

3. Method according to claim 2, characterised in that as status variables a gas lever setting, a temperature $T_2$ at the entrance to the power unit, a pressure $P_2$ at the entrance to the power unit, a high-pressure speed, a low-pressure speed and an attitude are respectively recorded in order to establish a stationary operating state.

4. Method according to any of the preceding claims, characterised in that the comparative value $(T_V)$ is determined from the measured values and at least one constant (k), and that in one of the initial operating phases the constant (k) is established with the help of the temperature value $(T_p)$ from the pyrometer.

5. Method according to any of the preceding claims, characterised in that the comparative value ($T_V$) is subjected to a filtering process.

6. Method according to any of the preceding claims, characterised in that the comparative value ($T_V$) is stored after it has been filtered.

7. Method according to claim 6, characterised in that the filtered comparative value ($T_V$) is only stored if its rate of change does not exceed a predetermined limiting value.

8. Method according to any of the preceding claims, characterised in that in the event of a given spread of a correction factor ($f_k$) over consecutive operating phases, by which the temperature value of the pyrometer ($T_p$) differs from the filtered comparative value ($T_V$), the correction factor is subjected to filtering.

9. Method according to claim 4, characterised in that the constant (k) is subjected to a filtering process during the initial operating phases.

10. Method according to any of claims 1 to 9, characterised in that the temperature value ($T_p$) from the pyrometer can only be corrected on the basis of the comparative value ($T_V$) when certain conditions as to the quality of the comparative value have been satisfied.

11. Method according to claim 10, characterised in that a condition as to quality is provided by a limiting value on the rate of change of the comparative value ($T_V$).

12. Method according to claim 10, characterised in that the temperature value ($T_p$) from the pyrometer is corrected between two operating phases of the gas turbine on the basis of the comparative value ($T_V$).

**Revendications**

1. Procédé pour corriger une valeur de température ($T_p$) mesurée par un pyromètre intégré à une turbine à gaz afin de corriger des facteurs d'erreur survenant au cours de durées de fonctionnement prolongées, des grandeurs de fonctionnement (ex. température $T_3$ du compresseur, pression $P_3$ du compresseur, quantité de combustible $W_F$, etc.) mesurées lorsque la turbine à gaz est en état de fonctionnement stationnaire servant à calculer la température de fonctionnement qui doit être mesurée par le pyromètre en tant que valeur comparative ($T_V$), une telle valeur comparative ($T_V$) étant déterminée, et un facteur de correction ($f_k$) étant déterminé à partir de la valeur ($T_p$) de température de

fonctionnement mesurée indiquée par le pyromètre et à partir de la valeur comparative calculée ($T_V$) et étant transmis au pyromètre comme valeur de correction.

2. Procédé selon la revendication 1, caractérisé en ce que, pour connaître l'état de fonctionnement stationnaire de la turbine à gaz, des grandeurs d'état sont relevées en continu lors de la phase de fonctionnement, en ce que les variations des grandeurs d'état sont contrôlées en continu et les valeurs mesurées sont mémorisées s'il apparaît que les variations remplissent une condition prédéfinie correspondant à l'état de fonctionnement stationnaire.

3. Procédé selon la revendication 2, caractérisé en ce que les grandeurs d'état relevées pour constater un état de fonctionnement stationnaire sont la position du levier des gaz, la température $T_2$ à l'entrée du système de propulsion, la pression $P_2$ à l'entrée du système de propulsion, la vitesse de rotation à haute pression, la vitesse de rotation à basse pression ou l'attitude en vol

4. Procédé selon une des revendications précédentes, caractérisé en ce que la valeur comparative ($T_V$) est déterminée à partir des valeurs mesurées et d'au moins une constante (k), et en ce que, dans l'une des premières phases de fonctionnement, la constante (k) est déterminée à l'aide de la valeur de température du pyromètre ($T_P$).

5. Procédé selon une des revendications précédentes, caractérisé en ce que la valeur comparative ($T_V$) est soumise à un procédé de filtrage.

6. Procédé selon une des revendications précédentes, caractérisé en ce que la valeur comparative ($T_V$) est mémorisée à l'issue du filtrage.

7. Procédé selon la revendication 6, caractérisé en ce que la valeur comparative filtrée ($T_V$) n'est mémorisée que si son degré de variation n'excède pas une valeur limite prédéterminée.

8. Procédé selon une des revendications précédentes, caractérisé en ce que, si un facteur de correction ($f_k$) correspondant à la différence entre la valeur de température ($T_P$) du pyromètre et la valeur comparative filtrée ($T_V$) présente une dispersion déterminée au cours de phases de fonctionnement successives, ledit facteur de correction est soumis à un filtrage.

9. Procédé selon la revendication 4, caractérisé en ce que la constante (k) est soumise à un procédé de filtrage lors des premières phases de fonctionnement.

**10.** Procédé selon l'une des revendications 1 à 9, caractérisé en ce que la valeur de température ($T_P$) du pyromètre n'est corrigée sur la base de la valeur comparative ($T_V$) que si certaines conditions qualitatives de la valeur comparative sont remplies.

**11.** Procédé selon la revendication 10, caractérisé en ce qu'une condition qualitative est établie constituée par une valeur limite du degré de variation de la valeur comparative ($T_V$).

**12.** Procédé selon la revendication 10, caractérisé en ce que la valeur de température du pyromètre ($T_P$) est corrigée sur la base de la valeur comparative ($T_V$) entre deux phases de fonctionnement de la turbine à gaz.